# FASCICULE DE BREVET EUROPEEN

(11) **EP 0 454 549 B1**
(45) Date de publication et mention de la délivrance du brevet: **09.02.1994**
(21) Numéro de dépôt: 91401045.9
(22) Date de dépôt: 19.04.1991
(51) Int. Cl.: B64C 13/16, B64C 13/50, G05D 1/08

(54) **Système pour le pilotage d'un avion en tangage**
Längstrimmlagesteuerung eines Flugzeugs
Aircraft pitch attitude control system

(30) Priorité: 24.04.1990 FR 9005227
(43) Date de publication de la demande: 30.10.1991
(73) Titulaire: AEROSPATIALE Société Nationale Industrielle, 75781 Paris Cédex 16 (FR)
(72) Inventeur: Farineau, Jacques, F-31400 Toulouse (FR)
(74) Mandataire: Bonnetat, Christian

(56) Documents cités:
- EP-A- 0 261 015
- GB-A- 2 050 980

## Description

La présente invention concerne un système pour piloter en tangage un avion volant à un nombre de Mach supérieur à 0,7.

On sait que, dans cette condition, la variation du couple aérodynamique de tangage dudit avion est telle, en fonction de l'incidence aérodynamique, que :
. au-dessous d'un premier seuil d'incidence, ledit couple aérodynamique de tangage décroît lorsque l'incidence aérodynamique croît, et croît lorsque l'incidence aérodynamique décroît ;
. entre ledit premier seuil d'incidence et un second seuil d'incidence, supérieur au premier seuil, ledit couple aérodynamique de tangage croît lorsque l'incidence aérodynamique croît et décroît lorsque l'incidence aérodynamique décroît ; et
. au-delà dudit second seuil d'incidence, ledit couple aérodynamique de tangage décroît lorsque l'incidence aérodynamique croît, et croît lorsque l'incidence aérodynamique décroît.

Par suite, si accidentellement l'incidence aérodynamique de l'avion dépasse ledit premier seuil, l'avion entre dans un domaine de vol instable où toute augmentation d'incidence entraîne une augmentation du couple aérodynamique de tangage, qui elle-même entraîne une augmentation d'incidence. Il en résulte un brusque cabrage de l'avion, éventuellement suivi d'un brusque piqué lorsque ledit second seuil est franchi, produisant un grand inconfort pour les passagers de l'avion.

La présente invention a pour objet de remédier à cet inconvénient dans le cas d'un avion comportant un plan horizontal réglable en braquage et des aérofreins présentant un effet piqueur en position déployée.

A cette fin, selon l'invention, le système pour piloter en tangage un avion volant à un nombre de Mach supérieur à 0,7 et comportant un plan horizontal réglable en braquage et des aérofreins à effet piqueur, la variation du couple aérodynamique de tangage dudit avion étant telle, en fonction de l'incidence aérodynamique, que :
. au-dessous d'un premier seuil d'incidence, ledit couple aérodynamique de tangage décroît lorsque l'incidence aérodynamique croît, et croît lorsque l'incidence aérodynamique décroît ;
. entre ledit premier seuil d'incidence et un second seuil d'incidence supérieur audit premier seuil, ledit couple aérodynamique de tangage croît lorsque l'incidence aérodynamique croît et décroît lorsque l'incidence aérodynamique décroît ; et
. au-delà dudit second seuil d'incidence, ledit couple aérodynamique de tangage décroît lorsque l'incidence aérodynamique croît, et croît lorsque l'incidence aérodynamique décroît ;

est remarquable en ce qu'il comporte :
- des premiers moyens fournissant, à chaque instant, l'incidence aérodynamique dudit avion ;
- des seconds moyens engendrant, dans le cas où ladite incidence aérodynamique est supérieure audit premier seuil, un premier ordre de commande à piquer pour ledit plan horizontal réglable, l'amplitude dudit premier ordre de commande étant telle que, si ledit plan horizontal réglable prenait instantanément la position correspondante, il compenserait l'augmentation du cabrage dudit avion due à l'allure de la variation dudit couple aérodynamique de tangage au-dessus dudit premier seuil ;
- des troisièmes moyens pour engendrer un signal représentatif de la réponse en braquage, en fonction du temps, dudit plan horizontal réglable audit premier ordre de commande ;
- des quatrièmes moyens pour former la différence entre ledit premier ordre de commande et ledit signal représentatif de la réponse dudit plan horizontal réglable ; et
- des cinquièmes moyens pour engendrer, à partir de ladite différence, un second ordre de commande à piquer pour lesdits aérofreins piqueurs.

Ainsi, selon l'invention, la compensation du brusque cabrage de l'avion, lorsque ledit premier seuil d'incidence est franchi, est obtenue par la commande au piquage du plan horizontal réglable et des aérofreins piqueurs. Si le cabrage de l'avion est trop rapide pour pouvoir être compensé instantanément par ledit plan horizontal réglable (dont la manoeuvre est relativement lente), lesdits aérofreins apportent instantanément (leur déploiement est rapide) le complément de compensation. On utilise donc de préférence le plan horizontal réglable pour gommer les inversions de la variation du couple aérodynamique de tangage en fonction de l'incidence aérodynamique, mais si ledit plan horizontal réglable n'est pas assez rapide, les aérofreins le suppléent transitoirement.

De préférence, afin d'anticiper la correction de cabrage de l'avion, on prévoit, entre lesdits premiers et seconds moyens, un additionneur permettant d'ajouter, à ladite incidence aérodynamique, une composante d'avance de phase.

Une telle composante d'avance de phase peut être proportionnelle à la vitesse de tangage de l'avion. En variante, elle peut être proportionnelle à la dérivée de l'incidence aérodynamique de l'avion.

Avantageusement, lesdits seconds moyens sont constitués par une table faisant correspondre des valeurs de braquage dudit plan horizontal réglable à des valeurs d'incidence aérodynamique de l'avion, lesdites valeurs de braquage étant nulles lorsque l'incidence est inférieure audit premier seuil.

Afin de tenir compte de la vitesse de déploiement du plan horizontal réglable, on prévoit, entre lesdits seconds moyens et ledit plan horizontal réglable, un dispositif limitant la vitesse de variation dudit premier ordre de commande en fonction des possibilités réelles de vitesse de débattement dudit plan horizontal réglable.

Par ailleurs, lesdits troisièmes moyens peuvent être constitués par un dispositif de simulation de la réponse en braquage, en fonction du temps, dudit plan horizontal réglable, lesdits troisièmes moyens recevant ledit premier ordre de commande. Un tel dispositif de simulation est par exemple constitué par des moyens de calcul ou de tabulation incorporant la fonction de transfert dudit plan horizontal réglable.

De préférence, lesdits cinquièmes moyens sont constitués par une table faisant correspondre des valeurs de braquage desdits aérofreins piqueurs à des valeurs positives de ladite différence, lesdites valeurs de braquage étant nulles pour des valeurs nulles ou négatives de ladite différence.

Comme on le verra ci-après, lorsque ledit avion comporte de plus des aérofreins à effet cabreur, il est avantageux que le système conforme à l'invention comporte des sixièmes moyens pour engendrer, à partir de ladite différence, un troisième ordre de commande à cabrer pour lesdits aérofreins cabreurs. Lesdits sixièmes moyens sont avantageusement constitués par une table faisant correspondre des valeurs de braquage desdits aérofreins cabreurs à des valeurs négatives de ladite différence, lesdites valeurs de braquage étant nulles pour des valeurs nulles ou positives de ladite différence.

De plus, la présente invention concerne un avion destiné à voler à un nombre de Mach supérieur à 0,7 et comportant un plan horizontal réglable en braquage et des aérofreins à effet piqueur, et remarquable en ce qu'il comporte un système de pilotage en tangage tel que spécifié ci-dessus.

Les figures du dessin annexé feront bien comprendre comment l'invention peut être réalisée. Sur ces figures, des références identiques désignent des éléments semblables.

La figure 1 montre en perspective schématique un avion susceptible d'être perfectionné selon l'invention.

La figure 2 est un diagramme illustrant la variation du couple aérodynamique de tangage dudit avion, en fonction de l'incidence aérodynamique de celui-ci.

La figure 3 illustre, à l'aide d'un diagramme analogue à celui de la figure 2, le fonctionnement du système conforme à la présente invention.

La figure 4 montre le schéma synoptique d'un mode de réalisation du système conforme à la présente invention.

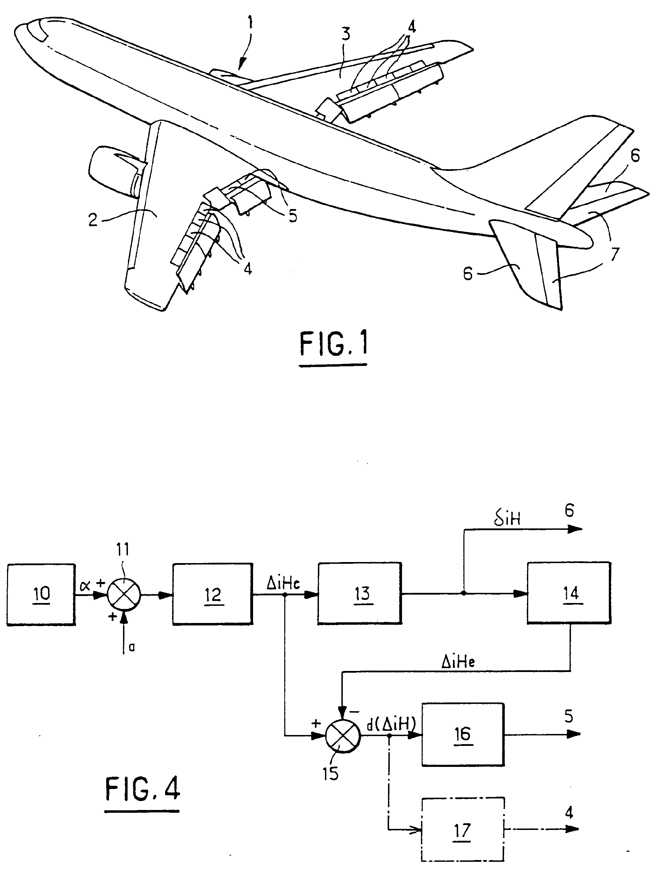

L'avion civil gros porteur 1, montré par la figure 1 et susceptible de voler à un nombre de Mach élevé (supérieur à 0,7), comporte sur ses ailes 2 et 3 de nombreuses surfaces aérodynamiques mobiles (volets, ailerons, etc ...), dont des aérofreins 4 et des aérofreins 5. Lorsqu'ils sont en position déployée, les aérofreins 4 ont, en plus de leur effet de freinage, un effet cabreur, c'est-à-dire élévateur, tandis que les aérofreins 5 ont, en plus de leur effet de freinage, un effet piqueur, c'est-à-dire descendeur. De plus, l'empennage horizontal arrière 6, sur lequel est monté le gouvernail de profondeur 7, est commandable en braquage, c'est-à-dire qu'il est réalisé sous la forme d'un plan (ou stabilisateur) horizontal réglable.

De façon connue, la vitesse de débattement des aérofreins cabreurs 4 et des aérofreins piqueurs 5 est très grande --elle est au moins égale à 30°/s--, mais ces aérofreins 4 et 5 ne peuvent, en dehors des périodes de freinage, être utilisés de façon prolongée pour leurs propriétés de cabrage ou de piqué, car les performances de l'avion 1 sont alors fortement dégradées par leur action de freinage et, de plus, leur mise en action entraîne l'apparition de vibrations, qui sont une source d'inconfort pour les passagers.

De façon également connue, la vitesse de changement de braquage du plan horizontal réglable 6 est faible --par exemple de l'ordre de 0,5°/s-- de sorte que ce plan horizontal réglable 6 ne peut être immédiatement efficace pour compenser une variation brusque de l'incidence de l'avion 1.

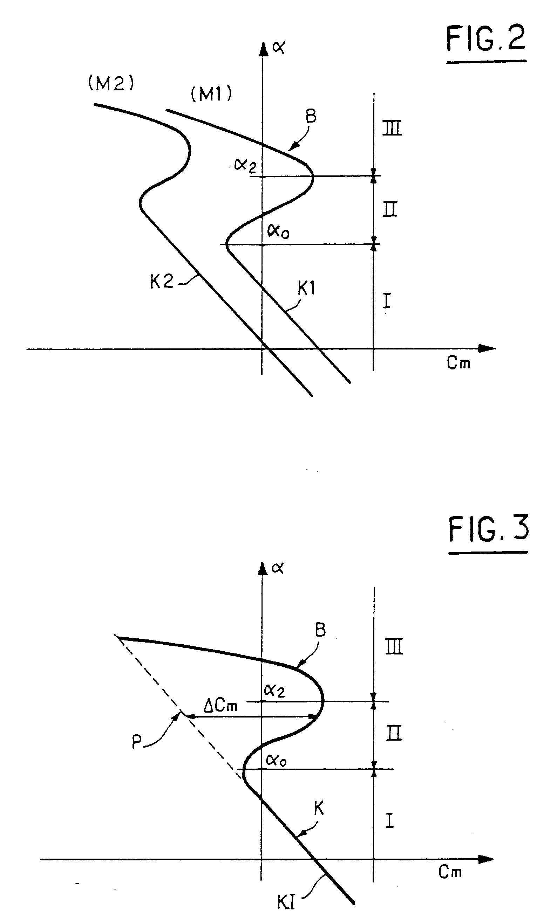

Si, comme cela est représenté sur le diagramme de la figure 2, on étudie la variation du couple aérodynamique en tangage Cm de l'avion 1 complet, pour une position fixe du plan horizontal réglable 6, en fonction de l'incidence aérodynamique α dudit avion, on obtient une courbe K semblable à la courbe K1 de cette figure 2, comportant trois zones I, II et III séparées par des seuils d'incidence αo et α2 et correspondant à des comportements différents de l'avion 1.

Dans la zone I, pour laquelle l'incidence aérodynamique α est inférieure au premier seuil αo, la variation du couple aérodynamique de tangage Cm est au moins à peu près inversement proportionnelle à l'incidence aérodynamique α. Par suite, si l'incidence α croît, le couple Cm décroît, c'est-à-dire que l'avion pique, ce qui a pour effet de faire décroître l'incidence. Inversement, si l'incidence α décroît, le couple Cm croît, l'avion se cabre et l'incidence croît. Dans la zone I, le vol de l'avion 1 est donc stable, tout écart par rapport à l'équilibre créant un effet tendant à l'y ramener. La zone I correspond alors au domaine de vol normal de l'avion 1, celui-ci étant longitudinalement stable.

Dans la zone II, pour laquelle l'incidence aérodynamique α est supérieure au premier seuil αo, mais inférieure au second seuil α2, la variation du couple aérodynamique de tangage Cm devient au moins à peu près proportionnelle à l'incidence aérodynamique α. Par suite, si l'inicdence α croît, le couple Cm croît et l'avion se cabre, ce qui a pour effet une nouvelle augmentation d'incidence. Inversement, si l'incidence α décroît, il en est de même du couple Cm, de sorte que l'avion 1 pique, avec pour conséquence une nouvelle diminution d'incidence. Dans ce cas, le mouvement en tangage de l'avion 1 est divergent, tout écart par rapport à l'équilibre créant un effet tendant à écarter davantage l'avion 1 dudit équilibre.

Enfin, dans la zone III, pour laquelle l'incidence aérodynamique α est supérieure au second seuil α2, la variation du couple aérodynamique de tangage Cm redevient sensiblement inversement proportionnelle à l'incidence aérodynamique α, comme dans la zone I, mais avec une plus grande sensibilité, car à une faible variation d'incidence, correspond une plus grande variation du couple Cm. La zone III correspond donc également à un domaine de vol stable.

Ainsi, à cause de la présence de la zone d'instabilité II, la courbe K1 présente une bosse B, disposée à cheval sur ledit second seuil α2 et représentative de la double inversion de la variation du couple Cm en fonction de l'incidence α.

Cette double inversion est due à un phénomène purement aérodynamique. Elle apparaît pour un nombre de Mach élevé (supérieur à 0,7) et est d'autant plus prononcée que ce nombre de Mach est plus élevé. De plus, plus le nombre de Mach est grand, plus le premier seuil d'incidence αo est petit. Ceci est illustré sur la figure 2, sur laquelle on a également représenté une courbe K2, analogue à la courbe K1, mais correspondant à un nombre de Mach M2 inférieur au nombre de Mach M1, associé à la courbe K1.

Les incidences de vol en croisière de l'avion 1 sont choisies,dans la zone I, inférieures au premier seuil αo, de sorte que la double inversion de variation du couple Cm n'a généralement pas d'effet sur le vol dudit avion. Toutefois, en croisière à Mach élevé, il peut se produire des circonstances dans lesquelles elle perturbe le vol. Par exemple, en pilotage manuel :
a) le pilote de l'avion 1 tire sur le manche et commande une augmentation d'incidence telle que celle-ci dépasse le premier seuil αo. Il en résulte que l'avion 1 s'embarque alors brutalement à cabrer (zone II) jusqu'à ce que l'incidence atteigne le second seuil α2, pour ensuite piquer tout aussi vivement (zone III) ;
b) ou encore, l'avion 1 rencontre des turbulences atmosphériques faisant augmenter soit l'incidence, soit le nombre de Mach, ou bien les deux, de sorte que l'incidence α devienne supérieure au premier seuil αo. L'avion 1 a alors tendance à s'embarquer comme dans le cas a).

Dans les deux cas, le facteur de charge appliqué à l'avion 1 pendant un tel embarquement à cabrer jusqu'à piquer prend des valeurs élevées, pouvant dépasser 2 g, de sorte qu'il en résulte un grand inconfort pour les passagers.

L'objet de la présente invention est de supprimer cet inconfort en améliorant le comportement de l'avion 1, au passage de la bosse B.

Pour ce faire, comme cela est illustré sur le diagramme de la figure 3, l'invention permet de prolonger, au niveau de la bosse B, la partie K.I de la courbe K correspondant à la zone I. Le prolongement P ainsi obtenu (tracé en pointillés) permet de relier cette partie K.I à la partie de la courbe K se trouvant dans la zone III, en court-circuitant la bosse B. En d'autres termes, à chaque valeur de l'incidence aérodynamique α supérieure au premier seuil αo, on retranche du couple Cm (orienté à l'élévation) une quantité ΔCm, telle que Cm - ΔCm varie sur le prolongement P. On gomme ainsi la bosse B et on peut la rendre transparente pour le pilote. L'avion 1 est alors stabilisé en incidence, même pour les valeurs de celle-ci supérieures au premier seuil αo.

Sur la figure 4, on a représenté le schéma synoptique d'un mode de réalisation du système conforme à la présente invention permettant d'obtenir le fonctionnement illustré par la figure 3. Ce système comporte une sonde 10 susceptible de délivrer l'incidence aérodynamique α de l'avion 1. A cette incidence aérodynamique α est ajoutée, par un additionneur 11, une composante a d'avance de phase. La composante a peut être proportionnelle au taux (ou vitesse) de tangage ou bien à la dérivée de l'incidence aérodynamique α et elle est engendrée par un dispositif non représenté.

L'incidence aérodynamique α, additionnée de la composante d'avance de phase a, est transmise à un dispositif de tabulation 12 faisant correspondre des valeurs ΔiHc aux valeurs α + a de la façon suivante :
- si α + a est inférieure à αo, ΔiHc est nul ;
- si α + a est supérieure à αo, ΔiHc est égal à la valeur du braquage à piquer que doit prendre le stabilisateur horizontal réglable 6 pour compenser le cabrage de l'avion 1, dû au fait que le seuil d'incidence αo est dépassé.

Les valeurs ΔiHc constituent donc un ordre de commande pour le stabilisateur horizontal réglable 6. Pour tenir compte de la lenteur de débattement de ce dernier, les valeurs ΔiHc sont adressées audit stabilisateur horizontal réglable 6 par l'intermédiaire d'un dispositif de limitation 13, adaptant l'évolution du signal ΔiHc dans le temps aux possibilités réelles du stabilisateur horizontal réglable 6. Ainsi, le dispositif 13 transforme le signal ΔiHc en un signal δiH, dont l'évolution temporelle est adaptée au stabilisateur horizontal réglable 6 et qui est appliqué à ce dernier.

Par ailleurs, le système selon l'invention comporte un dispositif 14 délivrant un signal ΔiHe représentatif du braquage à piquer instantané pris par le stabilisateur horizontal réglable 6, en réponse au signal δiH. Comme cela est représenté sur la figure 4, le dispositif 14 peut être un dispositif de simulation incorporant la fonction de transfert du stabilisateur horizontal réglable 6 et qui, à toute valeur du signal δiH, fait correspondre une valeur du signal ΔiHe. Le dispositif 14 peut être constitué par un dispositif de tabulation comportant une telle table de correspondance.

Dans un soustracteur 15, on retranche le signal ΔiHe, engendré par le dispositif 14, du signal ΔiHc, engendré par le dispositif de tabulation 12. On remarquera que la différence d(ΔiH) ainsi obtenue correspond à un manque instantané à piquer du stabilisateur horizontal réglable 6 pour compenser le cabrage de l'avion 1, manque qui est dû à la lenteur du débattement dudit stabilisateur horizontal réglable 6.

Aussi, pour suppléer à la lenteur de réaction du stabilisateur horizontal réglable 6, ladite différence d(ΔiH) est adressée aux aérofreins piqueurs 5 par l'intermédiaire d'un dispositif 16, transformant cette différence en ordre de braquage à piquer pour ceux-ci. Le dispositif 16 est une table fournissant une valeur de braquage à piquer des aérofreins 5 pour toute valeur positive de ladite différence, et des valeurs de braquage à piquer nulles si ladite différence est nulle ou négative.

On voit ainsi que, avec le système conforme à l'invention :
- la compensation du cabrage de l'avion 1 est due principalement à l'effet de braquage à piquer du stabilisateur horizontal réglable 6 ;
- les aérofreins piqueurs 5 fournissent le manque instantané d'effet à piquer, dû au fait que le stabilisateur horizontal réglable 6 a une vitesse de débattement limitée ; et
- l'action des aérofreins piqueurs 5 diminue au fur et à mesure que le stabilisateur horizontal réglable 6 se déploie.

On remarquera que la différence d(ΔiH) peut être négative, lorsque l'incidence α revient de valeurs supérieures à αo à des valeurs inférieures à αo, le stabilisateur horizontal réglable 6 étant cabré à piquer. Si un tel retour à des valeurs de α inférieures à αo se fait rapidement, il est nécessaire de ramener assez vite le stabilisateur horizontal réglable 6 au braquage initial (avant la commande à piquer). Or, à cause de son inertie de fonctionnement, le stabilisateur horizontal réglable 6 peut ne pas être capable de revenir rapidement à ce braquage initial. Dans ce cas, il apparaît un effet transitoire de manque à cabrer dans la zone I de la courbe K. Pour éliminer cet effet, on prévoit un dispositif 17 recevant le signal d(ΔiH) et engendrant un ordre de braquage à cabrer pour les aérofreins cabreurs 4. Le dispositif 17 est une table faisant correspondre des valeurs d'ordre à cabrer à ces valeurs négatives de ladite différence d(ΔiH), ces valeurs d'ordre à cabrer étant nulles lorsque ladite différence est positive ou nulle.

## Revendications

1. Système pour piloter en tangage un avion (1) volant à un nombre de Mach supérieur à 0,7 et comportant un plan horizontal (6) réglable en braquage et des aérofreins (5) à effet piqueur, la variation du couple aérodynamique de tangage (Cm) dudit avion étant telle, en fonction de l'incidence aérodynamique (α), que :
. au-dessous d'un premier seuil d'incidence (αo), ledit couple aérodynamique de tangage décroît lorsque l'incidence aérodynamique croît, et croît lorsque l'incidence aérodynamique décroît ;
. entre ledit premier seuil d'incidence (αo) et un second seuil d'incidence (α2) supérieur audit premier seuil, ledit couple aérodynamique de tangage croît lorsque l'incidence aérodynamique croît et décroît lorsque l'incidence aérodynamique décroît ; et
. au-delà dudit second seuil d'incidence (α2), ledit couple aérodynamique de tangage décroît lorsque l'incidence aérodynamique croît, et croît lorsque l'incidence aérodynamique décroît ;
caractérisé en ce qu'il comporte :
- des premiers moyens (10) fournissant, à chaque instant, l'incidence aérodynamique (α) dudit avion (1) ;
- des seconds moyens (12) engendrant, dans le cas où ladite incidence aérodynamique est supérieure audit premier seuil (αo), un premier ordre de commande à piquer (ΔiHc) pour ledit plan horizontal réglable (6), l'amplitude dudit premier ordre de commande étant telle que, si ledit plan horizontal réglable prenait instantanément la position correspondante, il compenserait l'augmentation du cabrage dudit avion due à l'allure de la variation dudit couple aérodynamique de tangage au-dessus dudit premier seuil ;
- des troisièmes moyens (14) pour engendrer un signal (ΔiHe) représentatif de la réponse en braquage, en fonction du temps, dudit plan horizontal réglable audit premier ordre de commande ;
- des quatrièmes moyens (15) pour former la différence d(ΔiH) entre ledit premier ordre de commande (ΔiHc) et ledit signal (ΔiHe) représentatif de la réponse dudit plan horizontal réglable ; et
- des cinquièmes moyens (16) pour engendrer, à partir de ladite différence d(ΔiH), un second ordre de commande à piquer pour lesdits aérofreins piqueurs (5).

2. Système selon la revendication 1,
caractérisé en ce que, entre lesdits premiers (10) et seconds moyens (12), est prévu un additionneur (11) permettant d'ajouter, à ladite incidence aérodynamique (α), une composante d'avance de phase (a).

3. Système selon la revendication 2,
caractérisé en ce que ladite composante d'avance de phase est proportionnelle à la vitesse de tangage de l'avion.

4. Système selon la revendication 2,
caractérisé en ce que ladite composante d'avance de phase est proportionnelle à la dérivée de l'incidence aérodynamique de l'avion.

5. Système selon l'une quelconque des revendications 1 à 4,
caractérisé en ce que lesdits seconds moyens (12) sont constitués par une table faisant correspondre des valeurs de braquage dudit plan horizontal réglable (6) à des valeurs d'incidence aérodynamique (α) de l'avion (1), lesdites valeurs de braquage étant nulles lorsque l'incidence aérodyamique (α) est inférieure audit premier seuil (αo).

6. Système selon l'une quelconque des revendications 1 à 5,
caractérisé en ce qu'il comporte, entre lesdits seconds moyens (12) et ledit plan horizontal réglable (6), un dispositif (13) limitant la vitesse de variation dudit premier ordre de commande en fonction des possibilités réelles de vitesse de débattement dudit plan horizontal réglable (6).

7. Système selon l'une quelconque des revendications 1 à 6,
caractérisé en ce que lesdits troisièmes moyens (14) sont constitués par un dispositif de simulation de la réponse en braquage, en fonction du temps, dudit plan horizontal réglable, lesdits troisièmes moyens (14) recevant ledit premier ordre de commande.

8. Système selon l'une quelconque des revendications 1 à 7,
caractérisé en ce que lesdits cinquièmes moyens (16) sont constitués par une table faisant correspondre des valeurs de braquage desdits aérofreins piqueurs (5) à des valeurs positives de ladite différence d(ΔiH), lesdites valeurs de braquage étant nulles pour des valeurs nulles ou négatives de ladite différence d(ΔiH).

9. Système selon l'une quelconque des revendications 1 à 8, destiné à un avion (1) comportant de plus des aérofreins (4) à effet cabreur,
caractérisé en ce qu'il comporte des sixièmes moyens (17) pour engendrer, à partir de ladite différence d(ΔiH), un troisième ordre de commande à cabrer pour lesdits aérofreins cabreurs (4).

10. Système selon la revendication 9,
caractérisé en ce que lesdits sixièmes moyens (17) sont constitués par une table faisant correspondre des valeurs de braquage desdits aérofreins cabreurs (4) à des valeurs négatives de ladite différence d(ΔiH), lesdites valeurs de braquage étant nulles pour des valeurs nulles ou positives de ladite différence d(ΔiH).

11. Avion (1) destiné à voler à un nombre de Mach supérieur à 0,7 et comportant un plan horizontal (6) réglable en braquage et des aérofreins (5) à effet piqueur,
caractérisé en ce qu'il comporte un système de pilotage en tangage tel que spécifié sous l'une quelconque des revendications 1 à 10.

## Claims

1. System for pitch control of an aircraft (1) flying at a Mach number higher than 0.7 and including a horizontal plane (6) which is adjustable in deflection and airbrakes (5) with a pitch-down effect, the variation in the aerodynamic pitch couple (Cm) of the said aircraft being such, as a function of the aerodynamic incidence (α), that:
. below a first incidence threshold (αo), the said aerodynamic pitch couple decreases when the aerodynamic incidence increases, and increases when the aerodynamic incidence decreases;
. between the said first incidence threshold (αo) and a second incidence threshold (α2) higher than the said first threshold, the said aerodynamic pitch couple increases when the aerodynamic incidence increases and decreases when the aerodynamic incidence decreases; and
. beyond the said second incidence threshold (α2), the said aerodynamic pitch couple decreases when the aerodynamic incidence increases, and increases when the aerodynamic incidence decreases;
characterised in that it includes:
- first means (10) supplying, at any instant, the aerodynamic incidence (α) of the said aircraft (1);
- second means (12) generating, in the case in which the said aerodynamic incidence is higher than the said first threshold (αO), a first pitch-down control command (ΔiHc) for the said adjustable horizontal plane (6), the amplitude of the said first control command being such that, if the said adjustable horizontal plane instantaneously took the corresponding position, it would compensate for the increase in the pitch-up of the said aircraft due to the curve of the variation of the said aerodynamic pitch couple above the said first threshold;
- third means (14) for generating a signal (ΔiHe) representative of the deflection response, as a function of time, of the said adjustable horizontal plane to the said first control command;
- fourth means (15) for forming the difference d(ΔiH) between the said first control command (ΔiHc) and the said signal (ΔiHe) which is representative of the response of the said adjustable horizontal plane; and
- fifth means (16) for generating, from the said difference d(ΔiH), a second pitch-down control command for the said pitch-down airbrakes (5).

2. System according to Claim 1, characterised in that, between the said first (10) and second (12) means, there is provided an adder (11) making it possible to add a phase advance component (a) to the said aerodynamic incidence (α).

3. System according to Claim 2, characterised in that the said phase advance component is proportional to the pitch speed of the aircraft.

4. System according to Claim 2, characterised in that the said phase advance component is proportional to the derivative of the aerodynamic incidence of the aircraft.

5. System according to any one of Claims 1 to 4, characterised in that the said second means (12) consist of a table setting up a correspondence between the deflection values of the said adjustable horizontal plane (6) and aerodynamic incidence values (α) of the aircraft (1), the said deflection values being zero when the aerodynamic incidence (α) is less than the said first threshold (αo).

6. System according to any one of Claims 1 to 5, characterised in that it includes, between the said second means (12) and the said adjustable horizontal plane (6), a device (13) limiting the speed of variation of the said first control command as a function of the actual speed of travel possible by the said adjustable horizontal plane (6).

7. System according to any one of Claims 1 to 6, characterised in that the said third means (14) consist of a device for simulating the deflection response, as a function of time, of the said adjustable horizontal plane, the said third means (14) receiving the said first control command.

8. System according to any one of Claims 1 to 7, characterised in that the said fifth means (16) consist of a table setting up a correspondence between the deflection values of the said pitch-down airbrakes (5) and positive values of the said difference d(ΔiH), the said deflection values being zero for zero or negative values of the said difference d(ΔiH).

9. System according to any one of Claims 1 to 8, intended for an aircraft (1) further including airbrakes (4) with a pitch-up effect, characterised in that it includes sixth means (17) for generating, from the said difference d(ΔiH), a third pitch-up control command for the said pitch-up airbrakes (4).

10. System according to Claim 9, characterised in that the said sixth means (17) consist of a table setting up a correspondence between deflection values of the said pitch-up airbrakes (4) and negative values of the said difference d(ΔiH), the said deflection values being zero for zero or positive values of the said difference d(ΔiH).

11. Aircraft (1) intended to fly at a Mach number higher than 0.7 and including a horizontal plane (6) which is adjustable in deflection and airbrakes (5) with a pitch-down effect, characterised in that it includes a pitch control system as specified under any one of Claims 1 to 10.

## Patentansprüche

1. System zur Fluglagenregelung bei Nickbewegung eines Flugzeuges (1), das mit einer Machzahl von mehr als 0,7 fliegt und über eine durch Ruder regelbare Horizontalebene (6) sowie über Störklappen (5) verfügt, wobei die Veränderung des Nickmoments (Cm) des Flugzeuges in Bezug auf den effektiven Anstellwinkel (α) derart ist, daß :
· unterhalb eines ersten Schwellenwertes des Anstellwinkels (αo) das aerodynamische Nickmoment kleiner wird, wenn der effektive Anstellwinkel größer wird und sich vergrößert, wenn der effektive Anstellwinkel kleiner wird;
· zwischen dem ersten Schwellenwert des Anstellwinkels (αo) und einem zweiten Schwellenwert des Anstellwinkels (α2), der größer ist als der erste Schwellenwert, das aerodynamische Nickmoment größer wird, wenn der Anstellwinkel größer wird und kleiner wird, wenn der Anstellwinkel kleiner wird ; und
· oberhalb des zweiten Schwellenwertes des Anstellwinkels (α2) das aerodynamische Nickmoment kleiner wird, wenn der effektive Anstellwinkel größer wird und sich vergrößert, wenn der effektive Anstellwinkel kleiner wird;
und das sich dadurch auszeichnet, daß es beinhaltet, daß :
- erste Mittel (10) unentwegt den effektiven Anstellwinkel (α) des Flugzeuges (1) liefern;
- zweite Mittel (12), sollte der effektive Anstellwinkel den ersten Schwel lenwert (αo) überschreiten, eine erste Befehlsfolge zum Sturzflug (ΔiHc) der regelbaren Horizontalebene (6) erzeugen, wobei die Stärke der ersten Befehlsfolge derart ist, daß, wenn die regelbare Horizontalebene unverzüglich die entsprechende Stellung einnimmt, sie die Zunahme des Steigfluges des Flugzeuges aufgrund der Geschwindigkeit der Veränderung des aerodynamischen Nickmoments oberhalb des ersten Schwellenwertes ausgleichen würde ;
- dritte Mittel (14) zur Erzeugung eines Signals (ΔiHe), das die Reaktionsgeschwindigkeit der Ruder der regelbaren Horizontalebene auf die erste Befehlsfolge repräsentiert ;
- vierte Mittel (15) zur Bildung der Differenz d(ΔiH) zwischen der ersten Befehlsfolge (ΔiHc) und dem Signal (ΔiHe), das die Reaktion der regelbaren Horizontalebene repräsentiert , und
- fünfte Mittel (16) zur Erzeugung einer zweiten Befehlsfolge zum Sturzflug für die Störklappen (5), ausgehend von der Differenz d(ΔiH).

2. System gemäß dem Anspruch 1,
gekennzeichnet dadurch, daß zwischen den ersten (10) und zweiten (12) Mitteln eine Additionseinrichtung (11) vorgesehen ist, die es ermöglicht, dem effektiven Anstellwinkel (α) eine Phasenverschiebungskomponente (a) hinzuzufügen.

3. System gemäß dem Anspruch 2,
gekennzeichnet dadurch, daß die Phasenverschiebungskomponente sich propor tional zur Nickgeschwindigkeit des Flugzeuges verhält.

4. System gemäß dem Anspruch 3,
gekennzeichnet dadurch, daß die Phasenverschiebungskomponente sich proportional zum Differentialquotienten des effektiven Anstellwinkels des Flugzeuges verhält.

5. System gemäß einem der Ansprüche 1 bis 4,
gekennzeichnet dadurch, daß die zweiten Mittel (12) aus einer Zahlentafel bestehen, die die Werte der Ruder der regelbaren Horizontalebene (6) mit den Werten des effektiven Anstellwinkels (α) des Flugzeugs (1) in Bezug setzt, wobei die Werte der Ruder Null sind, wenn der Anstellwinkel (α) kleiner ist als der erste Schwellenwert (αo).

6. System gemäß einem der Ansprüche 1 bis 5,
gekennzeichnet dadurch, daß es zwischen den zweiten Mitteln (12) und der regelbaren Horizontalebene (6) eine Vorrichtung (13) beinhaltet, die die Veränderungsgeschwindigkeit der ersten Befehlsfolge hinsichtlich der tatsächlichen Ausfahrmöglichkeiten der regelbaren Horizontalebene begrenzt.

7. System gemäß einem der Ansprüche 1 bis 6,
gekennzeichnet dadurch, daß die dritten Mittel (14) aus einer Vorrichtung bestehen, die die Reaktionsgeschwindigkeit der Ruder der regelbaren Horizontalebene simulieren, wobei die dritten Mittel (14) die erste Befehlsfolge empfangen.

8. System gemäß einem der Ansprüche 1 bis 7,
gekennzeichnet dadurch, daß die fünften Mittel (16) aus einer Zahlentafel bestehen, die die Klappenwerte der Störklappen (5) mit den positiven Werten der Differenz d(ΔiH) in Bezug setzen, wobei die Klappenwerte Null sind wenn die Differenz d(ΔiH) negativ oder Null ist.

9. System gemäß einem der Ansprüche 1 bis 8, bestimmt für ein Flugzeug, das zusätzlich über Bremsklappen (4) verfügt,
gekennzeichent dadurch, daß es sechste Mittel (17) zur Erzeugung einer dritten Befehlsfolge zum Steigflug für die Bremsklappen (4) beinhaltet, wobei von der Differenz d(ΔiH) ausgegangen wird.

10. System gemäß dem Anspruch 9,
gekennzeichnet dadurch, daß die sechsten Mittel (17) aus einer Zahlentafel bestehen, die die Klappenwerte der Bremsklappen (4) mit den negativen Werten Differenz d(ΔiH) in Bezug setzt, wobei die Klappenwerte Null sind, wenn die Differenz d(ΔiH) positive Werte aufweist oder Null ist.

11. Flugzeug (1), das bestimmt ist, mit einer Machzahl von mehr als 0,7 zu fliegen und das über eine durch Ruder regelbare Horizontalebene (6) sowie über Störklappen (5) verfügt,
gekennzeichnet dadurch, daß es über ein System zur Fluglagenregelung bei Nickbewegung verfügt, wie es in einem der Anprüche 1 bis 10 im einzelnen bezeichnet wurde.
